# EUROPÄISCHE PATENTSCHRIFT

(11) **EP 0 875 136 B1**
(45) Veröffentlichungstag und Bekanntmachung des Hinweises auf die Patenterteilung: **04.08.2004**
(21) Anmeldenummer: 98102402.9
(22) Anmeldetag: 12.02.1998
(51) Int. Cl.: A01F 15/07, A01F 15/08

(54) **Landwirtschaftliche Rundballenpresse**
Rotobaler
Presse à balles rondes

(30) Priorität: 30.04.1997 DE 19718229
(43) Veröffentlichungstag der Anmeldung: 04.11.1998
(73) Patentinhaber: Usines Claas France, 57141 Metz (FR)
(72) Erfinder: Wegert, Ralf, 49849 Wilsum (DE); Berkemann, Stephan, 33100 Paderborn (DE)
(74) Vertreter: Kus, Sascha

(56) Entgegenhaltungen:
- EP-A- 0 150 629
- EP-A- 0 268 003
- US-A- 5 165 332
- US-A- 5 367 865
- US-A- 5 622 104

## Beschreibung

Die Erfindung betrifft eine landwirtschaftliche Rundballenpresse mit einem Fahrwerk, einer Pickup-Einrichtung, einem Zuführkanal, einer seitlich durch Wände begrenzten Preßkammer zur Verdichtung des Ernteguts, sowie Riemen, Walzen oder Stabkettenförderern, die die Preßkammer zumindest teilweise umfangsseitig verstellbar begrenzen, einer Druckregelvorrichtung mit einem elektronischen Druckbegrenzungsventil sowie eines Steuer- und Regelvorrichtung zur Regelung des Preßdrucks, den die Riemen oder Stabkettenförderer auf das Erntegut ausüben, einer Vorrichtung zum Öffnen der Preßkammer sowie den Antriebsmitteln zum Betrieb der Rundballenpresse.

Eine solche Ballenpresse ist aus US-A-56 22 104 bekannt.

Eine weitere Ballenpresse ist aus der Schrift US 4,257,219 bekannt. In manchen Erntebedingungen ist es bei variablen Rundballenpressen wünschenswert, zunächst eine Startportion in der Preßkammer anzusammeln, bevor man damit beginnt, den Ballen zu pressen und rotierend zu bewegen, weil sonst leicht Unwuchten auftreten können, die einen negativen Einfluß auf die Ballenbildung haben. Dementsprechend ist es vorteilhaft, wenn man den Ballen zunächst mit geringerem Preßdruck starten und die Ballenbildung später mit erhöhtem Preßdruck fortsetzen kann. Die in der US 4,257,219 gezeigte Vorrichtung weist eine hydraulische Steuervorrichtung auf, die zu Beginn der Ballenbildung einen geringen Preßdruck und später einen erhöhten Preßdruck auf den Erntegutballen aufbringt. Die Umschaltung vom niedrigeren auf den erhöhten Preßdruck erfolgt mechanisch. Der Druckwert des Druckbegrenzungsventils, der die von der hydraulischen Steuervorrichtung auf den sich bildenden Ballen aufgebrachte Kraft beeinflußt, kann von Hand auf den gewünschten Wert eingestellt werden. Eine weitere gattungsgemäße Vorrichtung ist aus der EP 0 401 581 bekannt. Dort ist ein Hydrauliksystem mit einem zentralen Steuerventil und zwei Überhohen Preßdruck auf das Erntegut aufzubringen vermag. Die Verstellung des Druckbegrenzungsventils erfolgt per Hand. Bei der in dieser Schrift gezeigten Lösung ergibt sich eine Abhängigkeit vom Funktionsstatus der Heckklappenzylinder. Nachteil der vorgeschlagenen Vorrichtung ist der hohe Bauaufwand sowie die fehlende Variabilität und Flexibilität des Systems, wenn es auf unterschiedliche Druck- und Festigkeitswünsche hinsichtlich der zu bildenden Ballen angepasst werden soll.

Demgegenüber ist es Aufgabe der vorliegenden Erfindung, eine Vorrichtung für eine Rundballenpresse zu schaffen, die eine Verstellung des Preßdrucks während der Bildung des Bildung des Erntegutballens erlaubt, um einerseits einen Ballen mit höchstmöglicher Preßdichte zu bilden und andererseits jedoch die Unwuchten des Ballens zu beseitigen.

Die Erfindung wird nun anhand eines Ausführungsbeispiels näher erläutert. Es zeigen:
- Figur 1: eine Seitenansicht einer erfindungsgemäßen Rundballenpresse,
- Figur 2: eine schematische Darstellung eines Hydraulikschaltplans,
- Figur 3: ein Detail aus der Darstellung in Figur 2.

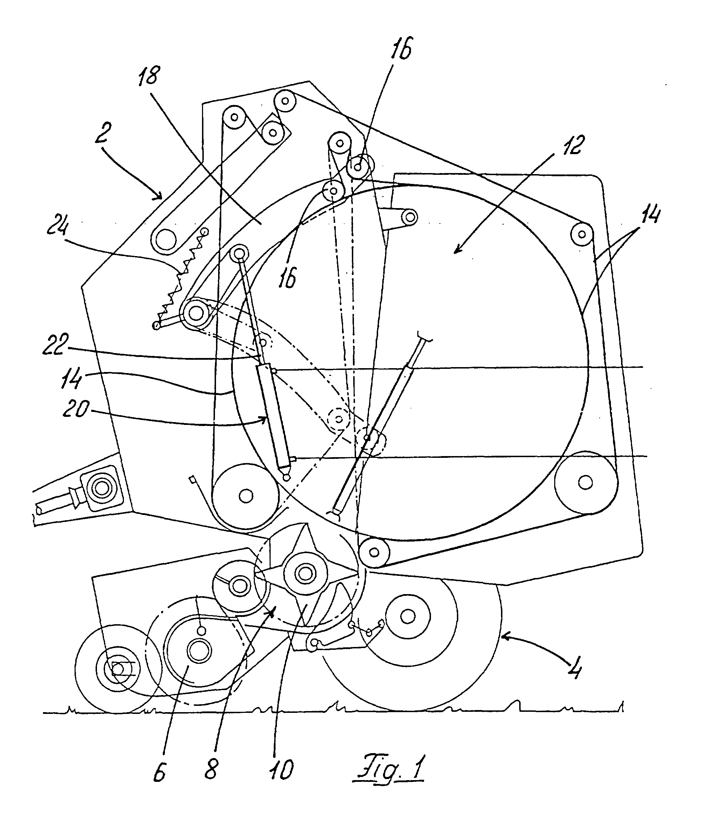

In Figur 1 ist eine Rundballenpresse 2 mit einem Fahrwerk 4, einer Pickup-Einrichtung 6, einem Zuführkanal 8, hier mit einem darin befindlichen Schneidwerk 10, und einer Preßkammer 12, die umfangsseitig von Riemen 14 begrenzt wird, zu sehen. Das Erntegut wird bei arbeitender Rundballenpresse 2 von der Pickup-Einrichtung 6 vom Erdboden aufgenommen, von Fördermitteln durch den Zuführkanal 8 und ein evtl. vorhandenes Schneidwerk hindurch in die Preßkammer 12 hineinbefördert. Dort wird das Erntegut angesammelt und von den angetriebenen Riemen 14 in eine rotierende Bewegung versetzt. Bei kontinuierlich zugefördertem Erntegut lagert sich das jeweils neu zugeförderte Erntegut außen auf dem sich bildenden Erntegutballen an und wird von den laufenden Riemen 14 zum einen auf die Außenoberfläche des sich bildenden Erntegutballens aufgedrückt, zum anderen aber auch in die rotierende Bewegung des sich bildenden Erntegutballens beschleunigt. Dieser Vorgang wird so lange fortgesetzt, bis sich ein ausreichend großer Durchmesser des Erntegutballens gebildet hat. Dann wird die Zufuhr von Erntegut unterbrochen, der fertige Erntegutballen wird mit Bindemitteln wie Garn, Netz oder Folie abgebunden und nach Öffnen der Heckklappe auf das Feld ausgeworfen. Mit dem Auswerfen des fertigen Erntegutballens ist die Preßkammer 12 wieder frei, um mit neu zugefrödertem Erntegut einen neuen Erntegutballen zu bilden.

Für die Bildung des Ballens ist es vorteilhaft, wenn die den Preßraum umfangsseitig umschließenden Riemen 14 eine möglichst hohe Preßkraft auf das Material des sich bildenden Erntegutballens ausüben. Die Riemen 14 werden deshalb regelmäßig über verstellbar angelenkte Umlenkwalzen 16 geführt, die von einem Kraftelement so vorgespannt werden, daß sich eine möglichst hohe Riemenspannung ergibt. Die Kraftelemente können beispielsweise aus Federn 24 oder Hydraulikzylindern 20 mit Kolbenstangen 22, die an die Schwenkarme 18 angreifen, oder einer Kombination aus beiden bestehen. Die Umlenkwalzen 16 können auf einem oder mehreren Schwenkarmen 18 befestigt sein. Abweichend von der Darstellung im Ausführungsbeispiel können anstelle nur eines Satzes von Riemen 14 auch mehrere Riemensätze, ein oder mehrere Sätze an Stabkettenförderern oder Kombinationen aus Riemen 14 und Stabkettenförderern mit einer oder mehreren den Preßraum teilweise begrenzenden Walzen erfindungsgemäß eingesetzt werden. Die eingesetzten Kraftelemente setzen der Expansionskraft des sich bildenden Ballens eine entgegengesetzte Preßkraft entgegen, die jedoch auf einen bestimmten Grenzwert beschränkt bleiben muß, wenn unerwünschte Überlastungen von der Rundballenpresse 2 ferngehalten werden sollen. Wird also der Grenzwert erreicht, so muß das Kraftelement entsprechend nachgeben, wenn durch nachgefördertes Erntegut eine Überschreitung des Grenzwertes droht. Wird die Kraft in einem hydraulischen Kreislauf aufund abgebaut, so ist dafür eine Steuerung und Regelung erforderlich.

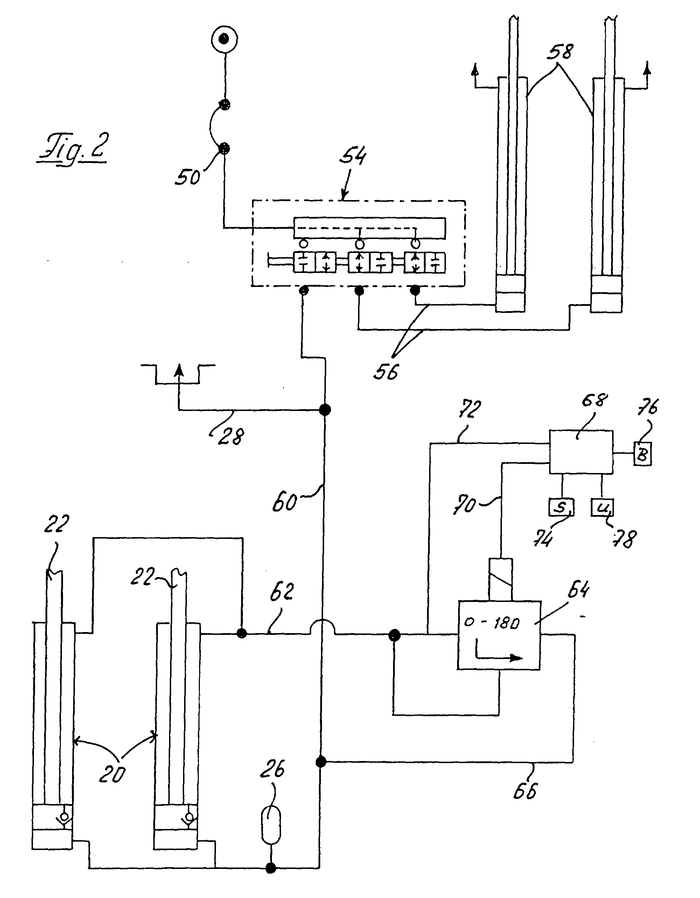

Figur 2 zeigt beispielhaft ein Schema für einen Schaltplan für den hydraulischen Kreislauf einer Rundballenpresse. Über eine Schnellkupplung 50 kann die Hydraulik mit einer TRaktorhydraulik verbunden werden, die über eine Pumpe 52 in ausreichender Menge und mit ebenfalls ausreichendem Druck hydraulisches Druckmittel wie beispielsweise Öl für die Hydraulikanlage der Rundballenpresse bereitstellt. An die Schnellkupplung 50 kann auch eine bordeigene Versorgungsvorrichtung der Rundballenpresse mit einer eigenen Pumpe 52 angeschlossen sein. Das hydraulische Druckmittel wird von einem Hauptsteuerblock 54 auf die einzelnen dadurch angetriebenen oder gesteuerten Arbeitsorgane der Rundballenpresse 2 verteilt. Die Leitungen 56 transportieren beispielsweise das hydraulische Druckmittel zu den Hydraulikzylindern 58, die die Heckklappe der Rundballenpresse 2 öffnen und schließen. Die Hydraulikleitung 60 transportiert das hydraulische Druckmittel zu den Hydraulikzylindern 20, die beim Ein- oder Ausfahren ihrer Kolbenstangen den Schwenkarm 18 bewegen und dadurch die Spannung der um die von den Schwenkarmen 18 getragenen Umlenkwalzen 16 laufenden Riemen 14 erhöhen oder vermindern. In der Ausgangsstellung, wenn also die Schwenkarme 18 völlig nach unten geschwenkt sind, befinden sich die Kolbenstangen 22 in einem weitestmöglich eingefahrenem Zustand. Wenn nun Erntegut in der Preßkammmer 12 gefördert wird, neigen die Schwenkarme 18 dazu, aufgrund des zunehmend ansteigenden Preßdrucks nach oben hin auszuweichen. Mit der beginnenden Schwenkbewegung der Schwenkarme 18 werden auch die an den Schwenkarmen 18 befestigten Kolbenstangen 22 aus dem Zylindergehäuse gezogen. Bei einer Ausfahr-Bewegung der Kolbenstangen 22 der Hydraulikzylinder 20 läuft das dadurch verdrängte hydraulische Druckmittel über die Leitung 62 aus den Hydraulikzylindern 20 ab. Kolbenbodenseitig kann hydraulisches Druckmittel aus dem Speicher 26 nachlaufen. An die Leitung 62 ist ein elektronisch gesteuertes Druckbegrenzungsventil 64 angeschlossen. Die elektronische Steuerung des elektronischen Druckbegrenzungsventils 64 bedeutet, daß es durch Pulsweitenmodulation stufenlos zwischen einem maximalen und einem minimalen Druckwert einstellbar ist, beispielsweise zwischen 0 und 180 bar. Steigt der in der Leitung 62 herrschende Druck über einen voreingestellten DruckGrenzwert von beispielsweise 160 bar hinaus an, so läßt das elektronische Druckbegrenzungsventil 64 so lange überschießendes hydraulisches Druckmittel in die Ablaufleitung 66 schießen, bis wieder ein Druckwert unterhalb des für das elektronische Druckbegrenzungsventil 64 voreingestellten Druckwerts erreicht ist. Auf diese Weise setzt das elektronische Druckbegrenzungsventil 64 zunächst dem Abfluß von hydraulischem Druckmittel aus den Hydraulikzylindern 20 solange einen Widerstand entgegen, wie nicht der voreingestellte Grenzwert erreicht wird, und verhindert nach Erreichen des Grenzwertes durch das Ablassen des hydraulischen Druckmittels, daß der Druck im entsprechenden hydraulischen System den voreingestellten Grenzwert kaum übersteigen kann. Je nach Höhe des voreingestellten Druckwertes kann so das elektronische Druckbegrenzungsventil 64 eine höhere oder geringere Preßkraft auf die Riemen 14 und mittelbar darüber auch auf das Erntegut bewirken. Der Abfluß des hydraulischen Druckmittels aus dem gezeigten Hydrauliksystem ist nicht näher dargestellt und ist über die Leitungen 28 nur angedeutet. Die Rückstellung der Hydraulikzylinder 20 erfolgt durch die in Figur 1 gezeigten Federn 24, die die Schwenkarme 18 nach dem Auswerfen des fertigen Erntegutballens wieder in ihre Ausgangsstellung zurückziehen.

Das elektronische Druckbegrenzungsventil 64 wird von einer elektronischen Steuer- und Regelvorrichtung 68 überwacht. Die Steuer- und Regelvorrichtung 68 ist über die Leitung 70, über die beispielsweise die Befehle zur Pulsweite übertragbar sind, mit dem elektronischen Druckbegrenzungsventil 64 verbunden. Über eine Leitung 72 kann die Steuerund Regelvorrichtung 68 unter Zuhilfenahme einer entsprechenden Software den Druck, der in der Leitung 62 herrscht, abfragen und bei Über- oder Unterschreitungen der voreingestellten Grenzwerte durch Pulsweitenmodulation die Durchlässigkeit des elektronischen Druckbegrenzungsventils 64 entsprechend so anpassen, daß die ermittelten Abweichungen zurückgeregelt werden. Zudem kann die Steuer- und Regelvorrichtung 68 mit einer Sensorik 74 verbunden sein, die den erreichten Durchmesser des sich bildenden Ballens oder einen äquivalenten Wert, wie beispielsweise die Auslenkung von Umlenkwalzen 16 mißt, und bei Erreichen eines vorbestimmten Durchmessers den Schwellwert des elektronischen Druckbegrenzungsventils 64 verändert.

In weiterer Ausgestaltung der Erfindung kann die Steuer- und Regelvorrichtung 68 oder das elektronische Druckbegrenzungsventil 64 selbst direkt mit einer Bedienvorrichtung 76, die vorzugsweise im Traktor angeordnet ist, verbunden sein. Es ist vorgesehen, daß der Maschinennutzer über entsprechende Bedienelemente in Stufen oder auch stufenlos beliebige Werte als Vorgaben für die Preßdichte eines oder mehrerer zu bildender Erntegutballen eingeben kann, die der Steuer- und Regelvorrichtung 68 bzw. direkt an das elektronische Druckbegrenzungsventil 64 übermittelt und dort in entsprechende Pulsweitensignale transformiert werden, die die Steuer- und Regelvorrichtung 68 dann noch über die Leitung 70 an das elektronische Druckbegrenzungsventil 64 weitergeben muß. Auch ist vorgesehen, daß der Maschinennutzer den vorgewählten Preßdichtewerten entsprechende Ballendurchmesser- oder Schichtdickewerte mittels der Bedienvorrichtung 76 zuordnet. Die Steuer- und Regelvorrichtung 68 beziehungsweise das elektronische Druckbegrenzungsventil direkt kann diese Eingabewerte speichern, die Ist-Durchmesser- oder Schichtdickewerte über die Sensoren 74 ermitteln und bei Erreichen der vorgegebenen Durchmesser- oder Schichtdickewerte die Pulsweiten zur Steuerung des elektronischen Druckbegrenzungsventils 64 entsprechend verändern.

In der Erfindung ist vorgesehen, an einer Stelle der Rundballenpresse 2 einen Unwuchtsensor 78 vorzusehen. Der Unwuchtsensor 78 ermittelt, ob der sich bildende Ballen eine gleichmäßige Gewichtsverteilung aufweist oder ob an einzelnen Positionen eines Umlaufs Gewichtsdefizite oder -überschüsse auftreten. Bei einer zu Beginn des Ballenbildungsprozesses geringen Preßkraft kann die Steuer- und Regelvorrichtung 68 anhand der vom Unwuchtsensor 78 übermittelten Daten die Preßkraft der Riemen 14 durch eine geeignete Steuerungssoftware anhand einer Pulsweitenmodulation des elektronischen Druckbegrenzungsventils 64 so gezielt beeinflussen, daß einerseits ein Ballen mit höchstmöglicher Preßdichte gebildet wird, andererseits jedoch die Unwuchten eines Ballens beseitigt werden, indem softwaregesteuert an einzelnen Stellen des Ballens mehr oder weniger Erntegut an den Ballen angepreßt wird. Alternativ kann der Unwuchtsensor ermitteln, ob sich der Ballenkern zu drehen begonnen hat. Liegt ein Mitdrehen vor, so kann die Steuer- und Regelelektronik auf eine hohe Preßkraft umschalten. Als Unwuchtsensoren können beispielsweise die Sensoren genutzt werden, die schon für die Rechts-Links-Anzeigen in Rundballenpressen vorhanden sind.

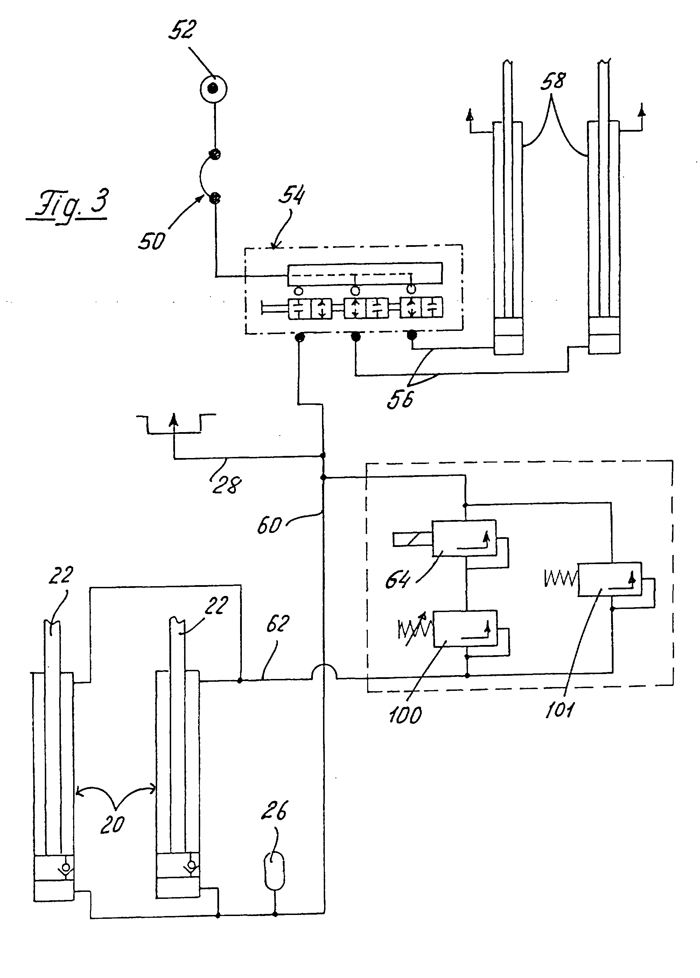

In Figur 3 ist eine erweiterte Ausführung eines elektronischen Druckbegrenzungsventils 64 dargestellt. Vor das elektronische Druckbegrenzungsventil 64 ist ein mechanisches handverstellbares Druckbegrenzungsventil 100 vorgelagert, um dann, wenn das elektronische Druckbegrenzungsventil 64 ausfallen sollte, einen Notbetrieb per Handsteuerung der Druckbegrenzung zu ermöglichen. Um das Auftreten zu großer Überdrücke zu verhindern, wird die Kombination der beiden hintereinandergeschalteten Druckbegrenzungsventile 64, 100 durch ein beispielsweise 180 bar festeingestelltes Druckbegrenzungsventil 101 abgesichert.

## Patentansprüche

1. Landwirtschaftliche Rundballenpresse mit einem Fahrwerk, einer Pick-Einrichtung, einem Zuführkanal, einer seitlich durch Wände begrenzten Presskammer zur Verdichtung des Emtegutes, sowie Riemen, Walzen oder Stabkettenförderern, die die Presskammer zumindest teilweise umfangsseitig verstellbar begrenzen, einer Druckregelvorrichtung mit einem elektronischen Druckbegrenzungsventil sowie einer Steuer- und Regelvorrichtung zur Regelung des Pressdrucks den die Riemen oder Stabkettenförderer auf das Erntegut ausüben, einer Vorrichtung zum Öffnen der Presskammer sowie den Antriebsmitteln zum Betrieb der Rundballenpresse,
**dadurch gekennzeichnet,**
**dass** die Steuer- und Regelvorrichtung (68) die Presskraft des elektronischen Druckbegrenzungsventils (64) nach den Vorgaben einer Unwuchtautomatik regelt.

2. Rundballenpresse nach Anspruch 1,
**dadurch gekennzeichnet,**
**daß** das elektronische Druckbegrenzungsventil (64) von der Steuer- und Regelvorrichtung (68) elektrisch ansteuerbar ist.

3. Rundballenpresse nach Anspruch 1 oder 2,
**dadurch gekennzeichnet,**
**daß** das elektronische Druckbegrenzungsventil (64) auf mindestens zwei unterschiedliche Druckwerte während der Bildung eines Ballens einstellbar ist.

4. Rundballenpresse nach einem oder mehreren der Ansoüche 1 bis 3,
**dadurch gekennzeichnet,**
**daß** über eine Bedienvorrichtung (76) ein oder mehrere die Preßkraft repräsentierenden Werte eingebbar sind, denen entsprechend die Pulsweite des elektronischen Druckbegrenzungsventils (64) veränderbar ist.

5. Rundballenpresse nach einem oder mehreren der Ansprüche 1 bis 4,
**dadurch gekennzeichnet,**
**daß** über eine Bedienvorrichtung (76) ein oder mehrere die Preßkraft repräsentierenden Werte sowie diesen zugeordnet die zugehörigen jeweiligen Schichtdicken des zu bildenden Erntegutballens eingebbar sind.

6. Rundballenpresse nach einem oder mehreren der Ansprüche 1 bis 6,
**dadurch gekennzeichnet,**
**daß** die Steuer- und Regelvorrichtung (68) über Sensoren den Ballendurchmesser erfaßt und durch Regelung der Preßkraft annähernd ein vorgewähltes Ballengewicht für den vorgewählten Ballendurchmesser regelt.

7. Rundballenpresse nach einem oder mehreren der Ansprüche 1 bis 7,
**dadurch gekennzeichnet,**
**daß** die Vorwahl der Preßkraft für den Weichern von der Art und/oder dem Zustand des Pressgutes abhängig manuell oder durch Auswertung von Sensordaten automatisch erfolgt.

8. Rundballenpresse nach einem oder mehreren der Ansprüche 1 bis 8,
**dadurch gekennzeichnet,**
**daß** daß elektronische Druckbegrenzungsventil (64) von der elektronischen Steuer- und Regelvorrichtung (68) beim Öffnen der Heckklappe zur Unterstützung des Ballenauswurfs angesteuert wird.

## Claims

1. An agricultural round bale press comprising a chassis, a picking device, a feed passage, a pressing chamber laterally delimited by walls for compacting the crop material, and belts, rollers or bar-chain conveyors which at least partially adjustably delimit the pressing chamber at the periphery, a pressure regulating device with an electronic pressure limiting valve and a control and regulating device for regulating the pressing pressure which the belts or bar-chain conveyors apply to the crop material, a device for opening the pressing chamber and the drive means for operation of the round bale press,
**characterised in that**
the control and regulating device (68) regulates the pressing force of the electronic pressure limiting valve (64) in accordance with the settings of an automatic unbalance system.

2. A round bale press according to claim 1 **characterised in that** the electronic pressure limiting valve (64) is electrically actuable by the control and regulating device (68).

3. A round bale press according to claim 1 or claim 2 **characterised in that** the electronic pressure limiting valve (64) can be set to at least two different pressure values during the formation of a bale.

4. A round bale press according to one or more of claims 1 to 3 **characterised in that** one or more values representing the pressing force can be inputted by way of an operating device (76), wherein the pulse width of the electronic pressure limiting valve (64) is variable in accordance with said values.

5. A round bale press according to one or more of claims 1 to 4 **characterised in that** one or more values representing the pressing force and associated therewith the associated respective layer thicknesses of the crop material bale to be formed can be inputted by way of an operating device (76).

6. A round bale press according to one or more of claims 1 to 6 **characterised in that** the control and regulating device (68) detects the bale diameter by way of sensors and by regulation of the pressing force approximately regulates a preselected bale weight for the preselected bale diameter.

7. A round bale press according to one or more of claims 1 to 7 **characterised in that** preselection of the pressing force for the soft core is effected manually in dependence on the nature and/or the condition of the material to be pressed or automatically by evaluation of sensor data.

8. A round bale press according to one or more of claims 1 to 8 **characterised in that** the electronic pressure limiting valve (64) is actuated by the electronic control and regulating device (68) upon opening of the tail flap to assist with bale ejection.

## Revendications

1. Presse agricole à balles rondes avec un châssis, un dispositif de ramassage, un canal d'introduction, une chambre de pressage délimitée latéralement par des parois afin de compresser le produit récolté ainsi que des courroies, des rouleaux ou des convoyeurs à chaîne qui délimitent la chambre de pressage sur sa circonférence au moins partiellement et de manière réglable, un dispositif de réglage de la pression avec un limiteur de pression électronique et un dispositif de commande et de régulation pour régler la force de pressage exercée par les courroies ou les convoyeurs à chaîne sur le produit récolté, un dispositif d'ouverture de la chambre de pressage ainsi que des moyens d'entraînement pour le fonctionnement de la presse à balles rondes, **caractérisée en ce que** le dispositif de commande et de régulation (68) régule la force de pressage du limiteur électronique de pression (64) en fonction des instructions d'un système automatique de contrôle du balourd.

2. Presse à balles rondes selon la revendication 1, **caractérisée en ce que** le limiteur électronique de pression (64) peut être piloté électriquement par le dispositif de commande et de régulation (69).

3. Presse à balles rondes selon la revendication 1 ou 2, **caractérisée en ce que** le limiteur électronique de pression (64) peut être réglé sur au moins deux valeurs de pression différentes pendant la formation d'une balle.

4. Presse à balles rondes selon une ou plusieurs des revendications 1 à 3, **caractérisée en ce qu'**il est possible de saisir, à l'aide d'un dispositif de commande (76), une ou plusieurs valeurs représentant la force de pressage, en fonction desquelles peut être corrigée la largeur d'impulsion du limiteur électronique de pression (64).

5. Presse à balles rondes selon une ou plusieurs des revendications 1 à 4, **caractérisée en ce qu'**il est possible de saisir, à l'aide d'un dispositif de commande (76), une ou plusieurs valeurs représentant la force de pressage ainsi que les différentes épaisseurs correspondantes, qui leur sont associées, de la couche de la balle de produit récolté en formation.

6. Presse à balles rondes selon une ou plusieurs des revendications 1 à 5, **caractérisée en ce que** le dispositif de commande et de régulation (68) détecte le diamètre de la balle à l'aide de capteurs et, en régulant la force de pressage, règle approximativement un poids de balle prédéterminé pour le diamètre de balle prédéterminé.

7. Presse à balles rondes selon une ou plusieurs des revendications 1 à 6, **caractérisée en ce que** la présélection de la force de pressage pour le noyau à faible densité s'effectue manuellement en fonction de la nature et/ou de l'état du produit pressé ou automatiquement par une analyse des données des capteurs.

8. Presse à balles rondes selon une ou plusieurs des revendications 1 à 7, **caractérisée en ce que** le limiteur électronique de pression (64) est piloté par le dispositif de commande et de régulation (68) lors de l'ouverture du capot arrière afin de contribuer à l'éjection de la balle.
